Europäisches Patentamt

European Patent Office

Office européen des brevets

(11) Veröffentlichungsnummer: **0 180 944**
**B1**

(12) **EUROPÄISCHE PATENTSCHRIFT**

(45) Veröffentlichungstag der Patentschrift:
30.08.89

(51) Int. Cl.⁴: **G 01 F   1/06**

(21) Anmeldenummer: **85113986.5**

(22) Anmeldetag: **04.11.85**

(54) **Gerät zum Messen eines Fluiddurchsatzes.**

(30) Priorität: **05.11.84 BG 67412/84**

(43) Veröffentlichungstag der Anmeldung:
**14.05.86 Patentblatt 86/20**

(45) Bekanntmachung des Hinweises auf die Patenterteilung: **30.08.89 Patentblatt 89/35**

(84) Benannte Vertragsstaaten:
**AT CH DE FR GB IT LI SE**

(56) Entgegenhaltungen:
**DE-A- 3 015 687**
**US-A- 4 011 757**

(73) Patentinhaber: **V M E I "LENIN"**
**Quartal Darvenitza**
**BG-1156 Sofia (BG)**

(72) Erfinder: **Todorov, Dimiter Todorov, Dipl.-Ing.**
**Hr. Tchernopeev-Str. B1. 146-B**
**BG-1113 Sofia (BG)**
Erfinder: **Djudjev, Slavtcho Georgiev, Dipl.-Ing.**
**Komplex Mladost-4, B1.415-A**
**Sofia (BG)**
Erfinder: **Yarumov, Kiril Dimitrov, Dipl.-Ing.**
**Komplex Banishora, B1.69-2**
**BG-1233 Sofia (BG)**

(74) Vertreter: **Finck, Dieter et al**
**Patentanwälte v. Füner, Ebbinghaus, Finck Mariahilfplatz 2 & 3**
**D-8000 München 90 (DE)**

## Beschreibung

Die Erfindung betrifft ein Gerät zum Messen eines Fluiddurchsatzes mit einem Außengehäuse, welches Eingangs- und Ausgangsöffnungen, Anschlußkanäle und eine zylindrische Meßkammer mit Tangentialeingang und Axialausgang aufweist, wobei in der Meßkammer eine Turbine mit Schaufeln gelagert ist, die sich gegenüber dem Tangentialeingang befinden, in der Schaufelebene ein photoelektrischer Drehzahlwandler angeordnet ist, im Außengehäuse ein Dämpfer für Pulsationen des Fluidstromes vorgesehen ist, dessen Eingangs- und Ausgangskammer durch eine biegsame Membran getrennt sind und die Eingangskammer mit dem Tangentialeingang der zylindrischen Meßkammer und die Ausgangskammer mit dem Axialausgang der Meßkammer und der Ausgangsöffnung des Wandlers hydraulisch verbunden sind.

Ein solches Gerät dient zur Messung des Verbrauches von Flüssigkeiten und Gasen in der chemischen und pharmazeutischen Industrie und insbesondere zur Messung des Verbrauches von flüssigem Kraftstoff bei Kraftfahrzeugen.

Aus der US-A-3 867 840 ist bereits ein Gerät zum Messen eines Fluiddurchsatzes bekannt, das ein Außengehäuse mit Ein- und Ausgangsöffnungen und eine zylindrische Meßkammer mit Tangentialeingang und Axialausgang aufweist. In der zylindrischen Meßkammer ist eine Turbine mit drei im Winkel von 120 Grad angeordneten Schaufeln gelagert. Auf der Innenfläche der zylindrischen Meßkammer befinden sich langgestreckte Vorsprünge mit dreieckigem Querschnitt. In der Drehebene der Turbinenschaufel ist ein photoelektrischer Wandler für die Umwandlung der Drehzahl in ein elektrisches Signal vorgesehen.

Die Funktionsweise des Geräts beruht auf einer linearen Abhängigkeit der Drehzahl der Turbine vom Fluiddurchsatz, da die sich auf der Zylinderfläche der Meßkammer befindenden Vorsprünge lokale hydraulische Widerstände bilden.

Nachteilig ist, daß die Meßgenauigkeit stark von der Dichte und Temperatur des durch die Meßkammer strömenden Fluids beeinträchtigt wird und daß der Meßbereich beschränkt ist, wozu die Turbulenzbildung im Fluidstrom bei höheren Strömungsgeschwindigkeiten beiträgt. Nachteilig ist ferner die komplizierte Form der Meßkammer mit Vorsprüngen, deren Anzahl, Konfiguration und Position von den Parametern des strömenden Fluids abhängen, schließlich ergibt sich ein beträchtlicher dynamischer Fehler bei der Durchsatzmessung von pulsierenden Fluiden.

Bei einem ähnlich gebauten, aus der US-A-4 011 757 bekannten Gerät ist zusätzlich ein Dämpfer für Pulsationen des Fluids vorgesehen, der eine Eingangs- und eine Ausgangskammer aufweist, die von einer biegsamen Membran mit einer harten Mittelfläche getrennt sind. Die Eingangskammer ist dabei mit dem Tangentialeingang, die Ausgangskammer mit dem Axialausgang der zylindrischen Meßkammer hydraulisch verbunden. Die biegsame Membrane wird in der Ausgangsposition von einer Schraubenfeder zum Vorderteil der Eingangsöffnung des Wandlers hingedrückt, so daß die Eingangsöffnung teilweise verschlossen ist. Mit einem solchen Dämpfer wird ein Ausgleich der Pulsationen des in die zylindrische Meßkammer des Wandlers einströmenden Fluids erreicht.

Nachteilig ist bei diesem Wandler der ungenügende Ausgleich der Pulsationen des Fluidstromes.

Die der Erfindung zugrunde liegende Aufgabe besteht darin, das Gerät zum Messen eines Fluiddurchsatzes der eingangs genannten Art so auszubilden, daß die Abhängigkeit des Meßfehlers von der Dichte und der Temperatur des strömenden Fluids beträchtlich vermindert wird, ein breiter Meßbereich möglich ist, sich die Form der Meßkammer vereinfachen läßt und sich der dynamische Fehler bei einem pulsierenden Fluidstrom klein halten läßt.

Diese Aufgabe wird erfindungsgemäß dadurch gelöst, daß die zylindrische Meßkammer eine glatte Innenfläche und ein zylindrisches Gehäuse aufweist, das im unteren Abschnitt des Außengehäuses angeordnet ist, daß auf der Seite der biegsamen Membrane zwei Halbkammern vorgesehen sind, die ein Teil der Eingangskammer des Dämpfers bilden, daß zwischen dem zylindrischen Gehäuse und dem unteren Abschnitt des Außengehäuses ein ringförmiger Raum ausgebildet ist, daß in der Außenwand der einen Halbkammer eine Öffnung und in der Außenwand der anderen Halbkammer eine Kompensationsöffnung vorgesehen sind, wobei die Kompensationsöffnung gegenüber dem Tangentialeingang der zylindrischen Meßkammer liegt, in der die Turbine mit flachen rechteckigen Schaufeln versehen angeordnet ist, daß im Axialausgang der zylindrischen Meßkammer ein Richtelement mit einer unteren und einer oberen Querfläche in Form von Kreissektoren so liegt, daß die untere Querfläche einen Teil des Axialausgangs der zylindrischen Meßkammer verschließt und die obere und untere Querfläche durch eine Schraubenfläche so verbunden sind, daß der Kreissektor der oberen Querfläche dem von der unteren Querfläche freigelassenen Raum gegenüberliegt, wobei sich der Anfang der Schraubenfläche über dem Tangentialeingang der zylindrischen Meßkammer befindet, und daß zwischen dem Axialausgang der zylindrischen Meßkammer und der Ausgangskammer des Dämpfers in dem Außengehäuse eine hydraulische Drossel vorgesehen ist.

Zweckmäßigerweise hat die Turbine zwei um einen Winkel von 180 Grad entfernte flache rechteckige Schaufeln.

Das erfindungsgemäße Gerät gewährleistet auch bei schwersten Einsatzbedingungen eine hohe Meßgenauigkeit, hat einen einfachen Aufbau und eine geringe Größe.

Anhand von Zeichnungen wird ein Ausführungsbeispiel der Erfindung näher erläutert. Es zeigt:

Fig. 1 perspektivisch teilweise axialgeschnitten die zylindrische Meßkammer mit Turbine und Richtelement,

Fig. 2 den Schnitt A-A von Fig. 1,

Fig. 3 das Gerät im Längsschnitt,

Fig. 4 den Schnitt B-B von Fig. 3 und

Fig. 5 in einem Diagramm die Abhängigkeit des relativen Fehlers vom Durchsatz für eine Meßkammer mit und ohne Richtelement.

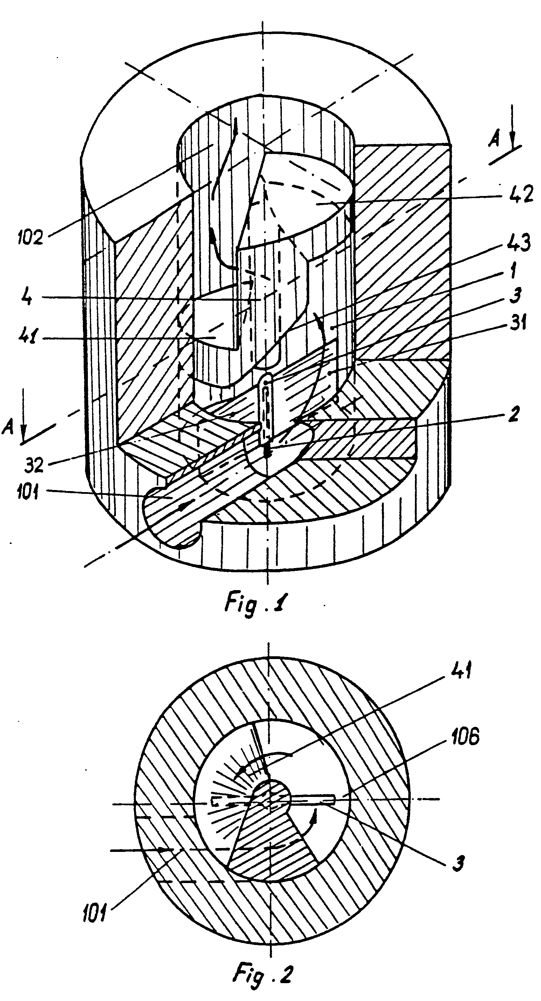

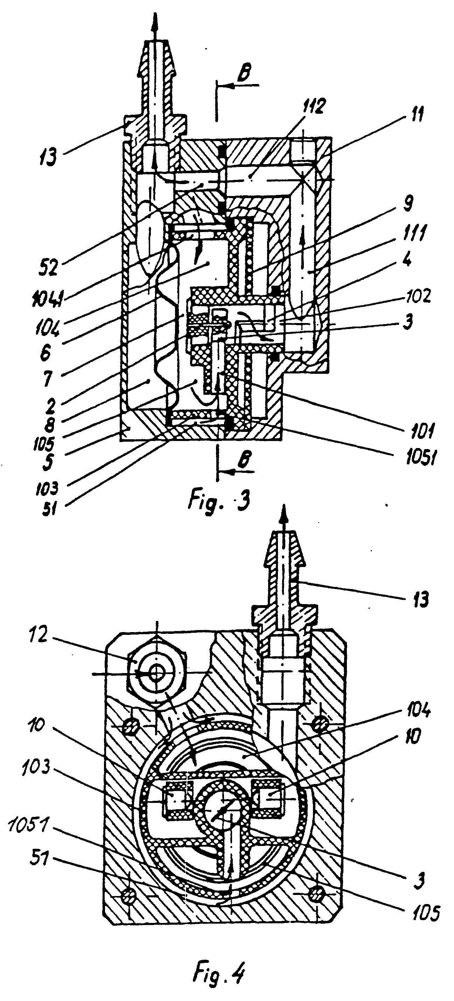

Die in Fig. 1 gezeigte zylindrische Meßkammer 1 hat eine glatte zylindrische Innenfläche, einen Tangentialeingang 101 und einen Axialausgang 102. In der zylindrischen Meßkammer 1 ist auf einer Achse 2 eine Turbine 3 angeordnet, die zwei Schaufeln 31 und 32 besitzt. Über der Turbine 3 ist in der zylindrischen Meßkammer 1 ein Richtelement 4 eingesetzt, das aus einer oberen Querfläche 42 und aus einer unteren Querfläche 41 besteht, die miteinander durch eine spiralförmige bzw. schraubenförmige Fläche 43 verbunden sind. Die untere Querfläche 41 (Fig. 2) hat die Form eines Kreissektors, der einen Teil des Querschnitts der zylindrischen Meßkammer 1 verschließt und einen Raum 106 freiläßt, während die obere Querfläche 42 aus einem Kreissektor besteht, der im Abstand dem freien Raum 106 gegenüberliegend angeordnet ist. Das Richtelement 4 ist in der zylindrischen Meßkammer 1 so eingesetzt, daß der Anfang der schraubenförmigen Fläche 43 über dem Tangentialeingang 101 liegt. Die aus für Infrarotlicht durchsichtigem Material angefertigte zylindrische Meßkammer 1 hat ein zylindrisches Gehäuse 103 (Fig. 3), das in der Grundfläche bzw. in dem unteren Abschnitt 5 des Außengehauses des Wandlers so positioniert ist, daß zwischen ihnen ein ringförmiger Raum 51 ausgebildet ist. Zwischen der Grundfläche 5 und dem zylindrischen Gehäuse 103 ist eine biegsame bzw. elastische Membran 6 befestigt, die eine Eingangskammer 7 von einer Ausgangskammer 8 eines Dämpfers des Wandlers trennt. In dem zylindrischen Gehäuse 103 sind so auf der einen Seite der biegsamen Membran 6 zwei Halbkammern 104 und 105 ausgebildet, die ein Teil der Eingangskammer 7 sind. In der Außenwand der Halbkammer 104 ist eine Öffnung 1041 vorgesehen. In der Außenwand der Halbkammer 105 befindet sich eine Kompensationsöffnung 1051, die dem Tangentialeingang 101 der zylindrischen Meßkammer 1 gegenüberliegt. Auf dem zylindrischen Gehäuse 103 liegt eine Platte 9, an der ein Strahler und ein Photoempfänger des photoelektrischen Drehzahlwandlers 10 (Fig. 4) befestigt sind. Die Platte 9 (Fig. 3) wird mit dem zylindrischen Gehäuse 103 gegen die Grundfläche 5 mit einem Deckel 11 gedrückt, in dem sich Anschlußkanäle 111 und 112 befinden. In der Grundfläche 5 ist zwischen dem Axialausgang 102 der zylindrischen Meßkammer 1 und der Ausgangskammer 8 des Dämpfers eine hydraulische Drossel 52 vorgesehen. Die Eingangskammer 7 und der ringförmige Raum 51 ist mit einer Eingangsöffnung 12 (Fig. 4) des Wandlers verbunden. Die Ausgangskammer 8 ist mit einer Ausgangsöffnung 13 verbunden.

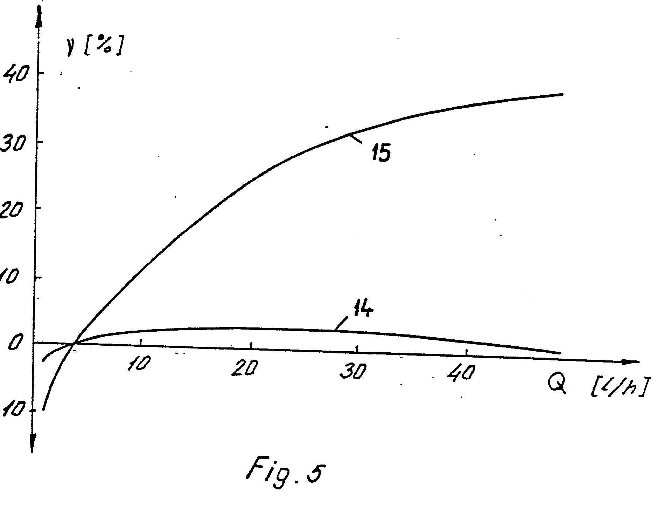

Das Gerät arbeitet wie folgt: Das durch den Tangentialeingang 101 (Fig. 1) einströmende Fluid wird in die zylindrische Meßkammer 1 gerichtet, in der ein schraubenförmiger, zu ihrem Axialausgang gerichteter Hauptstrom gebildet wird. Wegen der Zunahme der Fluidteilchen im unteren Teil der Meßkammer 1 wird ein Sekundärstrom gebildet, der sich mit einer vom Fluiddurchsatz abhängigen Winkelgeschwindigkeit dreht. Aufgrund dieser zwei Ströme wird die Turbine 3 des Geräts mit einer Drehzahl gedreht, die eine Funktion des gemessenen Fluidverbrauchs ist. Wegen der wesentlichen Differenzen in der Richtung des Hauptstromes im Bereich kleiner und großer Durchsätze, die auf Zyklonal- und Zentripetaleffekten beruhen, ist bei Axial- und Tangentialausgang ohne Richtelement diese Funktion nichtlinear (Fig. 5). Mit Richtelement 4 (Fig. 4) wird die Richtung des Hauptstromes unabhängig von einer Verbrauchsänderung ständig beibehalten. Bei geringen Durchsätzen muß der Hauptstrom wegen der Schraubenfläche 43 und der unteren Querfläche 41 sich längs der Spirallinie bzw. Schraubenlinie bewegen, wobei er mit den Schaufeln 31 und 32 der Turbine 3 unter einem Winkel von 270 Grad in Berührung kommt (Fig. 2). Auf diese Weise ist der Hauptstrom immer in Wechselwirkung mit einer der beiden Schaufeln 31, 32 der Turbine 3, was ihre gleichmäßige Drehung sichert.

Bei einer Durchsatzsteigerung ergeben sich in Folge der erhöhten Differenz des Fluiddruckes über dem Richtelement 4 (Fig. 1) und unter ihm wegen der Form seiner beiden Querflächen 41 und 42 Bedingungen für die Umwandlung der Drehbewegung des Hauptstromes in eine geradlinige Bewegung im Axialausgang 102, womit der Einfluß der Zyklonal- und Zentripetaleffekte kompensiert wird. Auf diese Weise wird bei optimaler Lage des Richtelements 4 in der zylindrischen Meßkammer 1 eine lineare Abhängigkeit der Drehzahl der Turbine 3 vom Fluiddurchsatz erreicht. Diese Drehzahl wird vom photoelektrischen Wandler 10 (Fig. 4) in ein elektrisches Signal umgewandelt, wenn eine der Schaufeln 31 und 32 der Turbine 3 den Lichtstrahl schneidet.

Wegen der Gewährleistung einer optimalen Ausrichtung des Fluidstromes in der zylindrischen Meßkammer 1 und wegen des Fehlens von hydraulischen Verlusten ist das Gerät unempfindlich gegenüber einer Änderung der Temperatur und der Dichte des Fluids und hat eine hohe Genauigkeit bei einem breiten Meßbereich.

Bei der Messung eines Verbrauchs bei pulsierendem Strom, wie er z. B. von einer Membranpumpe für Vergasermotoren mit Innenverbrennung erzeugt wird, arbeitet das Gerät auf folgende Weise: Eine sprungartige Erhöhung des Fluiddrucks in der Eingangsöffnung 12 des Geräts führt zu einer Deformierung der biegsamen Membran 6, die auf die Ausgangsöffnung 13 des Geräts übertragen wird. Aufgrund des Widerstandes der hydraulischen Drossel 52 sowie wegen des sich addierenden hydraulischen Widerstandes der zylindrischen Meßkammer 1 und der Anschlußkanäle 111 und 112 (Fig. 3) nimmt die Geschwindigkeit des Fluids durch die zylindrische Meßkammer 1 wesentlich langsamer zu. Auf diese Weise stellt sich ein Ausgleich des Druckes zwischen der Eingangsöffnung 12 und der Ausgangsöffnung 13 des Geräts ein, bevor der Gradient der Änderung des Durchsatzes durch die zylindrische Meßkammer 1 bis auf einen unzulässig großen Wert gewachsen ist, der zu einem dynamischen Fehler führen kann. Bei der nächsten sprungartigen Verminderung des Druckes in der Eingangsöffnung 12 des Geräts kommt die biegsame Membran 6 aufgrund ihrer Elastizität in ihre Ruhelage, wobei sie in analoger Weise die erzeugte Senkung des Druckes kompensiert.

Schädliche Resonanzerscheinungen, die von der gegenseitigen Beeinflussung der Quelle des pulsierenden Fluidstromes und der biegsamen Membran 6 verursacht werden, werden durch die von der partiellen hydraulischen Trennung der Halbkammer 104 und 105 gebildeten lokalen hydraulischen Widerstände in der Eingangskammer 7 des Dämpfers vermieden. Dem gleichen Zweck dient auch die Kompensationsöffnung 1051 in der Außenwand der Halbkammer 105, durch die ein Teil des Fluidstromes aus dem ringförmigen Raum 51 in den Tangentialeingang 101 der zylindrischen Meßkammer 1 fließt. Infolge der Dephasierung der Amplitudenwerte der Geschwindigkeit dieses Stromes und des Stromes, der von der Eingangskammer 7 des Dämpfers zuströmt, werden die Pulsationen des durch die zylindrische Meßkammer fließenden Reststromes in einem höheren Grade ausgeglichen.

Fig. 5 zeigt die Abhängigkeit des relativen Meßfehlers v in % vom Durchsatz Q in l/h für eine Meßkammer 1 ohne Richtelement 4 in der Kurve 15 und mit Richtelement 4 in der Kurve 14. Im letzteren Fall bleibt dieser Fehler extrem gering.

**Patentansprüche**

1. Gerät zum Messen eines Fluiddurchsatzes mit einem Außengehäuse, welches Eingangs- und Ausgangsöffnungen, Anschlußkanäle und eine zylindrische Meßkammer (1) mit Tangentialeingang (101) und Axialausgang (102) aufweist, wobei in der Meßkammer (1) eine Turbine (3) mit Schaufeln (31, 32) gelagert ist, die sich gegenüber dem Tangentialeingang (101) befinden, in der Schaufelebene ein photoelektrischer Drehzahlwandler (10) angeordnet ist, im Außengehäuse ein Dämpfer für Pulsationen des Fluidstromes vorgesehen ist, dessen Eingangs- und Ausgangskammer (7, 8) durch eine biegsame Membran (6) getrennt sind, und die Eingangskammer (7) mit dem Tangentialeingang (101) der zylindrischen Meßkammer (1) und die Ausgangskammer (8) mit dem Axialausgang (102) der Meßkammer (1) und der Ausgangsöffnung des Geräts hydraulisch verbunden sind, dadurch gekennzeichnet, daß die zylindrische Meßkammer (1) eine glatte Innenfläche und ein zylindrisches Gehäuse (103) aufweist, das im unteren Abschnitt (5) des Außengehäuses angeordnet ist, daß auf der Seite der biegsamen Membran (6) zwei Halbkammern (104, 105) vorgesehen sind, die ein Teil der Eingangskammer (7) des Dämpfers bilden, daß zwischen dem zylindrischen Gehäuse (103) und dem unteren Abschnitt (5) des Außengehäuses ein ringförmiger Raum (51) ausgebildet ist, daß in der Außenwand der einen Halbkammer (104) eine Öffnung (1041) und in der Außenwand der anderen Halbkammer (105) eine Kompensationsöffnung (1051) vorgesehen sind, wobei die Kompensationsöffnung (1051) gegenüber dem Tangentialeingang (101) der zylindrischen Meßkammer (1) liegt, in der die Turbine (3) mit flachen rechteckigen Schaufeln (31, 32) versehen angeordnet ist, daß im Axialausgang (102) der zylindrischen Meßkammer (1) ein Richtelement (4) mit einer unteren und einer oberen Querfläche (41, 42) in Form von Kreissektoren so liegt, daß die untere Querfläche (41) einen Teil des Axialausgangs (102) der zylindrischen Meßkammer (1) verschließt und die obere und untere Querfläche durch eine Schraubenfläche (43) so verbunden sind, daß der Kreissektor der oberen Querfläche (42) dem von der unteren Querfläche (41) freigelassenen Raum (106) gegenüberliegt, wobei sich der Anfang der Schraubenfläche (43) über dem Tangentialeingang (101) der zylindrischen Meßkammer (1) befindet, und daß zwischen dem Axialausgang (102) der zylindrischen Meßkammer (1) und der Ausgangskammer (8) des Dämpfers in dem Außengehäuse eine hydraulische Drossel (52) vorgesehen ist.

2. Gerät nach Anspruch 1, dadurch gekennzeichnet, daß die Turbine (3) zwei um einen Winkel von 180 Grad entfernte flache rechteckige Schaufeln (31, 32) aufweist.

**Claims**

1. Apparatus for measuring the flow rate of a fluid, having an outer housing which has entrances, exits, connection channels and a cylindrical measuring chamber (1) with tangential entrance (101) and axial exit (102), there being mounted in the measuring chamber (1) a turbine (3) with blades (31, 32) which are situated opposite the tangential entrance (101), and there being arranged in the plane of the blades a photoelectric rotary speed transducer (10), and there being provided in the outer housing a damper for pulsations of the fluid stream, the entrance and exit chambers (7, 8) of which are separated by means of a pliant membrane (6), and there being hydraulic connection between the entrance chamber (7) having the tangential entrance (101) of the cylindrical measuring chamber (1), and the exit chamber (8) having the axial exit (102) of the measuring chamber (1), and the exit of the apparatus, characterised in that the cylindrical measuring chamber (1) has a smooth inner surface and a cylindrical housing (103) which is arranged in the lower section (5) of the outer housing, and in that, on the side of the pliant membrane (6), two half-chambers (104, 105) are provided which form a part of the entrance chamber (7) of the damper, and in that, between the cylindrical housing (103) and the lower section (5) of the outer housing, an annular space (51) is constructed, and in that there are provided an opening (1041) in the outer wall of one half-chamber (104), and a compensation opening (1051) in the outer wall of the other half-chamber (105), the compensation opening (1051) being located opposite the tangential entrance (101) of the cylindrical measuring chamber (1), in which the turbine (3) is arranged and is provided with flat, rectangular blades (31, 32), and in that, in the axial exit (102) of the cylindrical measuring chamber (1), a directional element (4) having a lower and an upper, sector-shaped transverse surface (41, 42) is located in such a way that the lower transverse surface (41) seals a part of the axial exit (102) of the cylindrical measuring chamber (1), and the upper and lower transverse surfaces are connected by means of a˙screw surface (43), in such a way that the sector of the upper transverse surface (42) is located opposite the space (106) which is left open by the lower transverse surface (41), the start of the screw surface (43) being situated above the tangential entrance (101) of the cylindrical measuring chamber (1), and in that, between the axial exit (102) of the cylindrical measuring chamber (1) and the exit chamber (8) of the damper, a hydraulic choke (52) is provided in the outer housing.

2. Apparatus according to claim 1, characterised in that the turbine (3) has two flat, rectangular blades (31, 32) which are at an angle of 180 degrees.

**Revendications**

1. Dispositif pour la mesure d'un débit de fluide, comportant un carter extérieur présentant des ouvertures d'entrée et de sortie, des canaux de raccordement et une chambre cylindrique de mesure (1) comportant une entrée tangentielle (101) et une sortie axiale (102), étant précisé que dans la chambre de mesure (1) est montée une turbine (3) comportant des pales (31, 32) se trouvant en face de l'entrée tangentielle (101), que dans le plan des pales est disposé un transducteur photoélectrique de vitesse de rotation (10), que dans le carter extérieur est prévu un amortisseur des pulsations du flux du fluide, dont les chambres d'entrée et de sortie (7, 8) sont séparées par une membrane souple (6), dont la chambre d'entrée (7) est reliée hydrauliquement avec l'entrée tangentielle (101) de la chambre cylindrique de mesure (1) et dont la chambre de sortie (8) est reliée hydrauliquement avec la sortie axiale (102) de la chambre de mesure (1) et avec l'ouverture de sortie de l'appareil, caractérisé en ce que la chambre cylindrique de mesure (1) présente une surface intérieure lisse et un carter cylindrique (33) disposé dans la partie inférieure (5) du carter extérieur ; en ce que sur le côté de la membrane souple (6) sont prévues deux demi-chambres (104, 105) formant une partie de la chambre d'entrée (7) de l'amortisseur, en ce qu'entre le carter cylindrique (33) et la partie inférieure (5) du carter extérieur est formé un espace annulaire (51), en ce que dans la paroi extérieure de la première demi-chambre (104) est prévue une ouverture (1041) et dans la paroi extérieure de l'autre demi-chambre (105) est prévue une ouverture de compensation (1051), l'ouverture de compensation (1051) se trouvant en face de l'ouverture tangentielle (101) de la chambre cylindrique de mesure (1) dans laquelle est disposée la turbine (3) munie de pales rectangulaires plates (31, 32), en ce que dans la sortie axiale (102) de la chambre cylindrique de mesure (1), un élément directionnel (4) comportant une surface transversale inférieure et une surface transversale supérieure (41, 42) en forme de secteurs circulaires est placé de façon telle que la surface transversale inférieure (41) obture une partie de la sortie axiale (102) de la chambre cylindrique de mesure (1) et que les surfaces transversales supérieure et inférieure sont réunies par une surface hélicoïdale (43) de façon telle que le secteur circulaire de la surface transversale supérieure (42) se trouve en face de l'espace (106) laissé libre par la surface transversale inférieure (41), le début de la surface hélicoïdale (43) se trouvant au-dessus de l'entrée tangentielle (101) de la chambre cylindrique de mesure (1), et en ce qu'entre la sortie axiale (102) de la chambre cylindrique de mesure (1) et la chambre de sortie (8) de l'amortisseur, un étranglement hydraulique (52) est prévu dans le carter extérieur.

2. Dispositif selon la revendication 1, caractérisé en ce que la turbine présente deux pales rectangulaires plates (31, 32) éloignées d'un angle de 180°.

Fig . 1

Fig . 2

Fig. 3

Fig. 4

2

Fig.5